# FASCICULE DE BREVET EUROPEEN

(11) **EP 2 001 663 B1**
(45) Date de publication et mention de la délivrance du brevet: **20.03.2013**
(21) Numéro de dépôt: 07731160.3
(22) Date de dépôt: 20.03.2007
(51) Int. Cl.: B32B 5/26

(54) **NON-TISSE RESISTANT ET SE DELITANT**
STARKES, ZERFALLENDES VLIES
STRONG, DISINTEGRATING NONWOVEN

(30) Priorité: 28.03.2006 FR 0602669
(43) Date de publication de la demande: 17.12.2008
(73) Titulaire: ANDRITZ Perfojet SAS, 38330 Montbonnot (FR)
(72) Inventeur: NOELLE, Frédéric, F-38330 St Nazaire Les Eymes (FR)
(74) Mandataire: Eidelsberg, Victor Albert
(86) Numéro de dépôt international: PCT/FR2007/000469
(87) Numéro de publication internationale: WO 2007/110497

(56) Documents cités:
- EP-A- 0 303 528
- EP-A- 0 574 762
- EP-A- 1 302 592
- EP-A- 1 493 555
- EP-A- 1 614 790
- WO-A-01/51693
- WO-A-01/53590
- WO-A-01/66345
- WO-A-02/22352
- WO-A-02/44454
- WO-A-2005/012618
- DD-A1- 230 030
- US-A- 3 318 990

## Description

La présente invention est relative aux non-tissés et, plus particulièrement aux non-tissés qui se délitent facilement en milieu aqueux en étant biodégradables.

On connaît déjà des non-tissés biodégradables qui se délitent bien dans l'eau et qui sont constitués de fibres artificielles de cellulose et de préférence de viscose ayant une section plate. Ces non-tissés ont de bonnes propriétés de dispersion en milieu aqueux, mais n'ont pas une bonne résistance à l'usage lorsqu'ils sont utilisés sous forme lingettes humides, c'est-à-dire lorsqu'ils sont imprégnés d'une lotion comme par exemple les lingettes vendues imprégnées. Le document WO 2006/134 132 A1 divulgue un tel non-tissé.

La présente invention pallie cet inconvénient par un non-tissé biodégradable qui a de bonnes propriétés de résistance à l'état humide et qui a la propriété de se disperser facilement lorsqu'il est mis en milieu aqueux à saturation, par exemple lorsqu'il est jeté dans les toilettes.

Le non-tissé suivant l'invention comprend au moins une couche de fibres artificielles de cellulose et, de préférence de viscose, ayant une section plate, et au moins une couche en une matière cellulosique, notamment en fibres de bois.

Les fibres de bois ont la propriété de se disperser facilement en milieu aqueux car la présence d'eau rompt les liaisons dites hydrogène qui normalement donnent la résistance aux feuilles de fibres de bois sèches.

Or on a trouvé et ce qui fait l'objet de la présente invention qu'un non-tissé constitué des fibres de bois enchevêtrées par l'action de jets d'eau à une couche de fibre de viscose ou de lyocell à section plate, a une bonne résistance d'usage à l'état humide mais non saturé, et par ailleurs a de bonnes propriétés de délitement lorsqu'il est saturé d'eau comme par exemple lorsqu'il est jeté dans les toilettes.

Il a été découvert d'une manière inattendue qu'un non-tissé constitué de 40% à 70% de fibres de bois en une couche enchevêtrées par l'action de jets d'eau à une autre couche (représentant le complément à 100 % du non-tissé à deux couches) de fibres de viscose ou de lyocell à section aplatie, a une résistance à l'état humide supérieure à un non-tissé de même poids au mètre carré constitué seulement des mêmes fibres à section plate. De plus, le non-tissé selon l'invention se délite facilement lorsqu'il est à saturation d'eau, comme par exemple lorsqu'il est jeté dans les toilettes.

En dessous de 40 % de fibres de bois, la résistance à l'état humide mais non saturée d'eau ou de liquides est insuffisante.

Les fibres à section aplatie de viscose sont généralement à surface légèrement rainurée. Elle ont un titre compris entre 1 dtex et 6 dtex et de préférence compris entre 1.5 et 3.5 dtex. La longueur des fibres est comprise entre 5 et 40 mm et de préférence entre 15 mm et 40 mm. Le rapport entre la plus grande dimension de la section et la plus petite dimension est compris entre 2,5 et 8 et de préférence entre 3 et 5. La plus grande dimension est comprise entre 10 et 40 microns et de préférence entre 15 et 25 microns. Les fibres de section aplatie sont de préférences cardées en voile, mais peuvent aussi être mises en nappe par un procédé aéraulique dit airlaid ou airlay. Elles peuvent aussi être déposées par voie humide.

Les fibres de bois sont de longueur variable de 1 mm à 5 mm et de préférence de 2 mm à 4 mm. Elles sont de préférence issues de résineux mais peuvent aussi être de feuillus ou un mélange des deux.

Les fibres de bois sont soit déposées par voie aéraulique à sec, c'est la technique dite Airlaid qui permet de déposer les fibres de bois à la surface ou entre 2 voiles de fibres plates. Les fibres de bois peuvent aussi provenir de feuilles de papier qui sont déroulées sur la nappe de fibres plates après une première consolidation par des jets d'eau.

Enfin les fibres de bois peuvent être formées en une feuille directement sur le voile de fibres plates soit par une dépose à l'aide de mousse, sous par la technique dite voie humide. Dans ces deux cas de formation d'une feuille humide, il est préférable de donner une première consolidation au voile de fibres à section aplatie, par exemple par l'action de jet d'eau ou d'un autre fluide comme l'air, voire encore des jets de vapeur.

Les non-tissés utilisés comme lingettes ont des masse au mètre carré de 20 g/m2 à 100 g/m2 et de préférence de 30 g/m2 à 60 g/m2.

Elles sont généralement commercialisées humides, imprégnées de 150% à 500% en poids et de préférence de 200% à 400% d'une solution cosmétique parfumée. Elles peuvent être aussi imprégnées d'une solution détergente, stérilisante, biocide, dans le cas des lingettes de ménages, par exemple pour le nettoyages des toilettes.

Le stratifié peut comprendre aussi une troisième couche de fibres de bois ou de fibres plates de cellulose, la troisième couche étant consolidée avec l'ensemble des deux autres ou l'ensemble étant consolidé par hydroliage.

Les non-tissés selon l'invention peuvent être utilisés pour d'autres applications que les lingettes, et généralement dans tous les usages pour lesquels il sont susceptible d'être jetés dans l'eau par exemple les toilettes.

L'invention a aussi pour objet un procédé de production d'un non-tissé, caractérisé en ce que l'on dépose une couche de matière cellulosique sur une couche de fibre artificielle de cellulose et on consolide les deux couches par hydroliage.

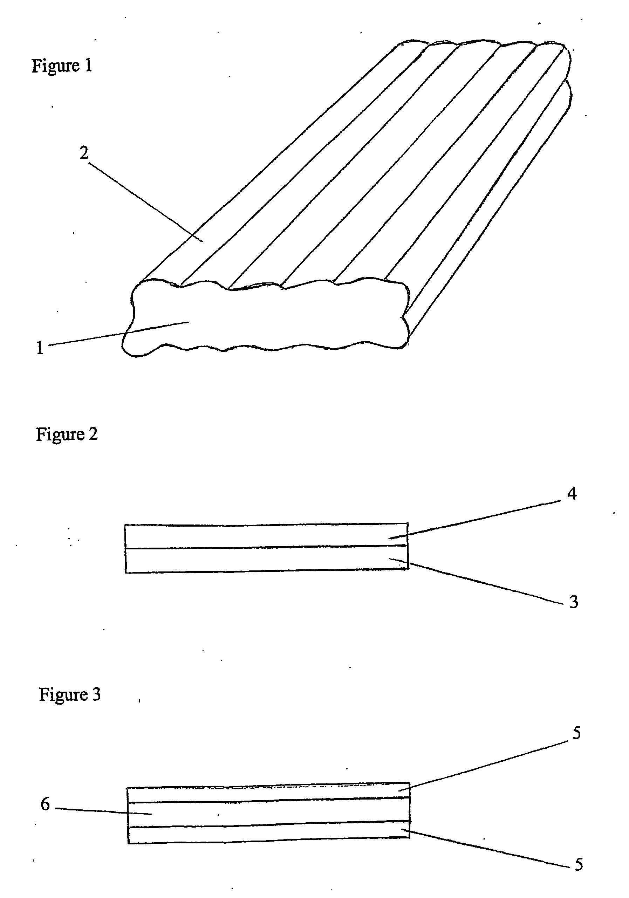

Figure 1 : Vue en coupe d'une fibre de viscose à section aplatie 1 de 2,4 dtex avec des stries de surface 2.
Figure 2 : Vue en coupe d'un non-tissé selon l'invention avec la couche de fibres plates 3 et la couche de fibres de bois 4. Cette représentation est schématique car en réalité, les fibres de bois ont largement pénétré dans la couche de fibres plates.
Figure 3 : Vue en coupe d'un non-tissé à 3 couches. Fibres plates 5 et fibres de bois 6.

Les tests de résistance sens machine et sens travers sont réalisés selon la norme EDANA ERT 20.2-89. On conditionne un échantillon pendant 24 heures et on effectue l'essai à 23°C et à une humidité relative de 50 %. On utilise pour le test un dynamomètre comprenant un jeu de mâchoires fixes et un jeu de mâchoires mobiles se déplaçant à une vitesse constante. Les mâchoires du dynamomètre ont une largeur utile de 50 mm. Le dynamomètre est équipé d'un enregistreur qui permet de tracer la courbe de la force de traction en fonction de l'allongement. On coupe 5 échantillons de 50 mm plus ou moins 0,5 mm de largeur et de 250 mm de longueur, ceci dans le sens long et dans le sens travers du non tissé. Les échantillons sont testés un par un, à une vitesse constante de traction de 100 mm par minute et avec une distance initiale entre mâchoires de 200 mm. Le dynamomètre enregistre la courbe de la force de traction en newtons en fonction de l'allongement dont on détermine le maximum.

### Exemple comparatif :

Un non-tissé de 50 g/m2 constitué de fibres de viscose à section aplatie Viloft de 2,4 dtex et 30 mm de longueur commercialisées par la société Kelheim Allemagne, est préparé sur une ligne de production jetlace 3000 de la société Rieter Perfojet. Les fibres cardées en une nappe par une carde à une vitesse de 70 m/min sont d'abord compactées et soumises à l'action d'un premier injecteur délivrant des jets d'eau de 120 microns à une pression de 20 bars. La nappe est ensuite consolidées par l'action de 2 injecteurs par face délivrant respectivement des jets d'eau de 120 microns à des pressions de 50, 70, 80, 80 bars. le non-tissé ainsi obtenu est séché dans un four à air traversant à une température de 130° C puis est enroulé sous la forme d'une bobine.

Le non-tissé obtenu est doux et peu résistant à sec. Il est imprégné avec de l'eau à un taux de 300% en poids, c'est à dire que chaque kg de non-tissé est imprégné de 3.0 kg d'eau. C'est un taux d'imprégnation habituel pour les lingettes non-tissé vendues humides. Comme par exemple les lingettes cométiques, les lingettes de toilette et les lingettes pour bébés.

Le non-tissé ainsi humidifié a une résistance en sens machine de 15 N/50 mm en sens machine avec un allongement à la rupture de 28%. Il a une résistance en sens travers de 8 N/50 mm avec un allongement à la résistance maximale de 32%.

Le non-tissé est peu résistant. Il se rompt facilement. Il a une très faible résistance à l'abrasion. Les fibres de surface sont facilement arrachées du non-tissé humide. Il n'a pas une cohésion suffisante pour être utilisé comme lingette d'hygiène personnelle. Il gonfle et se disperse relativement facilement lorsqu'il est plongé dans l'eau

### Exemple :

Un non-tissé de 50 g/m2 selon l'invention, constitué de 25 g/m2 des même fibres de viscose à section plate Viloft et de 25 g/m2 de fibres de bois est préparé sur une ligne de production Jetlace 3000 de la société Rieter Perfojet. Une carde délivre un voile de 25 g/m2 de fibres de viscose à section plate à une vitesse de 70 m/min. A la surface de ce voile et en continu sont déposés 25 g/m2 de fibres de bois par la technique dite Airlaid. Le complexe ainsi obtenu est compacté et mouillé par un premier injecteur délivrant des jets d'eau de 120 microns de diamètre à une pression de 25 bars. Ensuite quatre injecteurs délivrant des jets d'eau de 120 microns à des pressions respectivement de 40 bars, 60 bars, 80 bars et 80 bars, réalisent l'enchevêtrement des fibres de bois avec les fibres de viscose plates. le non-tissé ainsi obtenu est séché à une température de 130°C puis est enroulé.

Le non-tissé obtenu est doux et très résistant à sec. Il est imprégné avec de l'eau à un taux de 300% en poids comme dans l'exemple précédent

Le non-tissé ainsi humidifié a une résistance en sens machine de 25 N/50 mm en sens machine avec un allongement à la rupture de 30%. Il a une résistance en sens travers de 18 N/50 mm avec un allongement à la rupture de 50%.

## Revendications

1. Non-tissé comprenant un stratifié comprenant une couche (3) de fibres artificielles de cellulose, de préférence de viscose, et une couche (4) de matière cellulosique, notamment de fibres de bois, les fibres de la couche (3) sont de section plate,
**caractérisé en ce qu'**il comprend de 40 à 70 % en poids de matière cellulosique.

2. Non-tissé suivant la revendication 1, **caractérisé en ce que** les fibres de section plate ont un titre compris entre 1 dtex et 6 dtex, de préférence entre 1,5 et 3,5 dtex.

3. Non-tissé suivant l'une des revendications 1 ou 2, **caractérisé en ce que** les fibres de section plate ont une longueur comprise entre 5 et 40 mm, de préférence entre 15 et 40 mm.

4. Non-tissé suivant l'une des revendications précédentes, **caractérisé en ce que** les fibres de section plate ont un rapport de la dimension de la section la plus grande à la dimension de la section la plus petite compris entre 2,5 et 8 et de préférence entre 3 et 5, la plus grande dimension étant comprise entre 10 et 40 microns et de préférence entre 15 et 25 microns.

5. Non-tissé suivant l'une des revendications précédentes, **caractérisé en ce qu'**il a une masse au m² de 20 g/m² à 100 g/m² et de préférence 30 g/m² à 60 g/m².

6. Non-tissé suivant l'une des revendications précédentes, **caractérisé en ce qu'**il est imprégné d'une solution à raison de 150 à 500 % en poids.

7. Procédé de production d'un non-tissé suivant les revendications précédentes, **caractérisé en ce que** l'on dépose une couche de matière cellulosique sur une couche de fibre artificielles de cellulose de section plate la couche de matière cellulosique représentant de 40 à 70% du poids des deux couches et on consolide les deux couches par hydroliage.

8. L'utilisation d'un non-tissé suivant l'une quelconque des revendications 1 à 6, comme lingette qui se délite.

9. L'utilisation d'un non-tissé suivant la revendication 8, comme lingette biodégradable.

## Claims

1. Non-woven material comprising a laminate comprising a layer (3) of, preferably viscous, synthetic cellulose fibres and a layer (4) of cellulose material, in particular wood fibres, the fibres of the layer (3) being flat in section, **characterised in that** it is made up of 40 to 70% in weight of cellulose material.

2. Non-woven in accordance with claim 1, **characterised in that** the flat-section fibres have a title between 1 dtex and 6 dtex, preferably between 1.5 and 3.5 dtex.

3. Non-woven in accordance with one of claims 1 or 2, **characterised in that** the flat-section fibres are between 5 and 40mm long, preferably between 15 and 40mm.

4. Non-woven in accordance with one of the preceding claims, **characterised in that** between the flat-section fibres, the ratio between the size of the largest flat-section fibre and the smallest is between 2.5 and 8 and preferably between 3 and 5 with the largest dimension being between 10 and 14 microns and preferably between 15 and 25 microns.

5. Non-woven in accordance with one of the preceding claims, **characterised in that** it has a mass in m² of 20 g/m² to 100 g/m² and of preferably 30 g/m² to 60 g/m².

6. Non-woven in accordance with one of the preceding claims, **characterised in that** it is impregnated with a solution of around 150 to 500 % by weight.

7. Method for the production of a non-woven material in accordance with the preceding claims, **characterised by** the application of a layer of cellulose material on a layer of flat-section synthetic cellulose fibre the cellulose material layer representing 40 to 70% of the weight of the two layers and with the two layers being brought together by hydro-entangling.

8. The use of a non-woven material in accordance with one of the preceding claims 1 to 6, as a wipe which disintegrates.

9. The use of a non-woven material in accordance with claim 8, as a bio-degradable wipe.

## Patentansprüche

1. Vlies, umfassend einen Schichtstoff, der eine Schicht (3) aus künstlichen Zellulosefasern, vorzugsweise aus Viskose, sowie eine Schicht (4) aus Zellulosematerial, insbesondere aus Holzfasern umfasst, die Fasern der Schicht (3) weisen einen flachen Querschnitt auf, **dadurch gekennzeichnet, dass** es 40 bis 70 Gew.-% Zellulosematerial umfasst.

2. Vlies nach Anspruch 1, **dadurch gekennzeichnet, dass** die Fasern mit flachem Querschnitt einen Titer zwischen 1 dtex und 6 dtex, vorzugsweise zwischen 1,5 und 3,5 dtex aufweisen.

3. Vlies nach einem der Ansprüche 1 oder 2, **dadurch gekennzeichnet, dass** die Fasern mit flachem Querschnitt eine Länge im Bereich zwischen 5 und 40 mm, vorzugsweise zwischen 15 und 40 mm aufweisen.

4. Vlies nach einem der vorhergehenden Ansprüche, **dadurch gekennzeichnet, dass** die Fasern mit flachem Querschnitt ein Verhältnis von der Abmessung des größten Querschnitts zur Abmessung des kleinsten Querschnitts zwischen 2,5 und 8 und vorzugsweise zwischen 3 und 5 aufweisen, wobei die größte Abmessung zwischen 10 und 40 Mikrometer und vorzugsweise zwischen 15 und 25 Mikrometer beträgt.

5. Vlies nach einem der vorhergehenden Ansprüche, **dadurch gekennzeichnet, dass** es ein Flächengewicht von 20 g/m² bis 100 g/m² und vorzugsweise 30 g/m² bis 60 g/m² aufweist.

6. Vlies nach einem der vorhergehenden Ansprüche, **dadurch gekennzeichnet, dass** es mit einer Lösung in einer Menge von 150 bis 500 Gew.-% imprägniert ist.

7. Verfahren zur Herstellung eines Vlieses nach den vorhergehenden Ansprüchen, **dadurch gekennzeichnet, dass** eine Schicht aus Zellulosematerial auf eine Schicht aus künstlichen Zellulosefasern mit flachem Querschnitt aufgebracht wird, wobei die Schicht aus Zellulosematerial 40 bis 70 % des Gewichts der beiden Schichten ausmacht, und die beiden Schichten durch Wasserstrahlbehandlung verfestigt werden.

8. Verwendung eines Vlieses nach einem der Ansprüche 1 bis 6, als Feuchttuch, das verwittert.

9. Verwendung eines Vlieses nach Anspruch 8, als biologisch abbaubares Feuchttuch.
